# EUROPEAN PATENT SPECIFICATION

(11) **EP 0 946 857 B1**
(45) Date of publication and mention of the grant of the patent: **20.07.2005**
(21) Application number: 97950567.4
(22) Date of filing: 19.12.1997
(51) Int. Cl.: G01B 11/275

(54) **METHOD AND DEVICE FOR WHEEL ALIGNMENT**
VERFAHREN UND VORRICHTUNG ZUR AUSRICHTUNG VON FAHRZEUGRÄDERN
PROCEDE ET DISPOSITIF DE REGLAGE DU PARALLELISME DES ROUES

(30) Priority: 20.12.1996 SE 9604741
(43) Date of publication of application: 06.10.1999
(73) Proprietor: VOLVO LASTVAGNAR AB, 405 08 Göteborg (SE)
(72) Inventor: INGVARSSON, Henrik, S-439 37 Onsala (SE); NILSSON, Martin, S-427 35 Billdal (SE)
(74) Representative: Hellbom, Lars Olof
(86) International application number: PCT/SE1997/002191
(87) International publication number: WO 1998/028595

(56) References cited:
- DE-A- 3 729 946
- DE-C- 4 212 426
- US-A- 5 532 816

## Description

The present invention relates to a method for wheel alignment for a vehicle having at least two wheel pairs and a connection, such as a vehicle frame, therebetween. The invention also relates to a measuring system for measuring wheel angles and projected width of a vehicle.

A device for determining the angles of the wheels of a vehicle is described in WO-A1-94/05969. According to this document, the vehicle is placed on a test bed, which has two parallel metal strips on which the wheels of the vehicle rest. A target in the form of a disc is applied to the outside of each wheel, and each disc is provided with a pattern. A camera which is coupled to a computer reads, via a lens and mirror system, the pattern on each target. Depending on how the camera registers the appearance of the pattern, the angle of each wheel relative to a defined system of coordinates can be determined by a calculating algorithm in the computer.

In order to carry out the measurement with the device according to the document above, the vehicle must be stationary on the two parallel metal strips. This means that during measurement it is presupposed that the direction of travel of the vehicle coincides with the longitudinal geometric centerline of the vehicle. The frame of a vehicle can, however, be crooked and the axles or wheels can be set so that the longitudinal geometric centerline of the vehicle does not coincide with the direction of travel of the vehicle, and this in turn means that the projected width of the vehicle will be greater than the actual width of the vehicle.

Furthermore, the wheel angles of a stationary vehicle differ from the wheel angles when the vehicle is in motion, and therefore the wheel angles obtained from the above known measuring method do not provide the actual wheel angles when the vehicle is in motion.

Document US-A-5 532 816 discloses a laser tracking wheel alignment measurement method wherein the natural rotational plane of a rotating wheel is measured under driving conditions. After reflectors have been attached to each respective wheel, the vehicle is driven past laser tracking units.

One purpose of the present invention is to reduce tyre wear occurring as a result of deviations in vehicle wheel angles from ideal values and/or because a towing hitch has been mismounted on the vehicle.

An additional purpose of the present invention is to achieve the smallest possible projected width of a vehicle as seen in the direction of travel of the vehicle, in order to thereby reduce the air drag and fuel consumption.

Another purpose of the present invention is to achieve an accurate measuring system for rapidly checking wheel angles and the projected width of a vehicle.

This is achieved according to the invention by virtue of a measuring system according to claim 10.

The process for achieving these objectives is characterized in the method of claim 1.

This measuring system and method provides precise measurement rapidly carried out as the vehicle passes with the wheels rolling on a surface past the measuring units. The measurement provides values for vehicle wheel angles, direction of travel and the longitudinal geometric centerline. Based on these values, the vehicle can be adjusted to reduce the projected width and to reduce tyre wear as a result of misaligned wheels. Furthermore, measurement values for the placement of the towing hitch are obtained. An incorrectly placed towing hitch can result in non-symmetrical loading of the vehicle, which must be absorbed by the vehicle wheels which are thus subjected to increased wear.

The invention will be described in more detail below with reference to examples shown in the accompanying drawings, where
Fig. 1 shows a schematic view from above of a vehicle,
Fig. 2 shows a schematic view from above of a vehicle which is provided with a towing hitch,
Fig. 3 shows a schematic view from above of a vehicle which is passing between two measuring units, and
Fig. 4 shows a schematic view of a vehicle as seen from behind, passing between three measuring units.

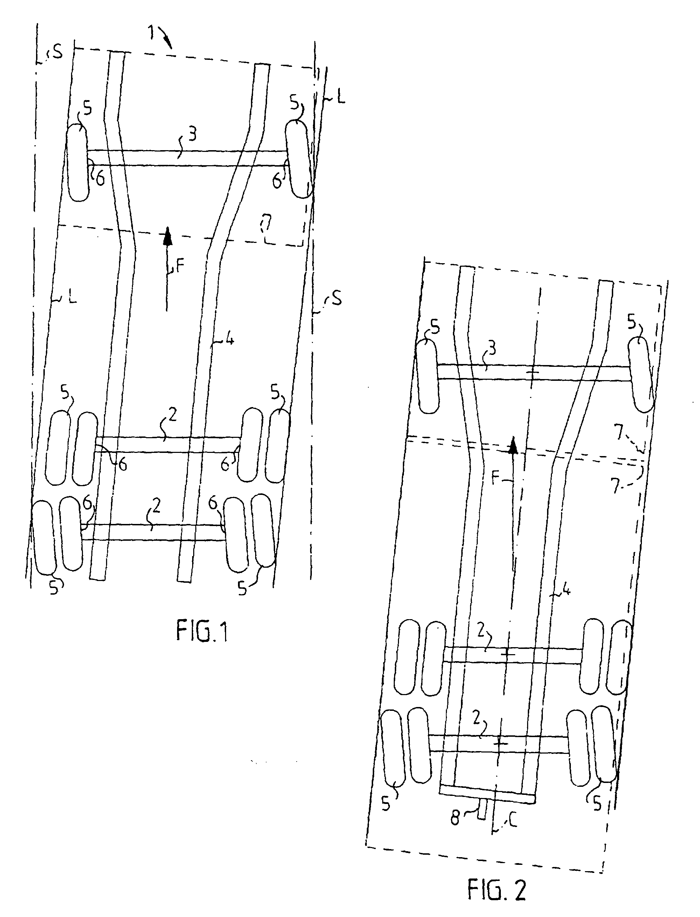

Fig. 1 shows a schematic view from above of a vehicle, such as a truck, comprising two rear axles 2, a front axle 3 and a vehicle frame 4. Wheels 5 are mounted at each main axle end 6. Two wheels 5 are arranged on an axle forming a wheel pair. The angles of the axles 2, 3 and the wheels 5 are exaggeratedly misaligned in Fig. 1. The dashed rectangles on the vehicle 1 symbolize a cab and a superstructure 7 arranged on the vehicle 1, such as a van or flatbed. The distance between the parallel, solid lines L along the longitudinal sides of the vehicle 1 represents the minimum projected width of the vehicle 1. The distance between the parallel, dash-dot lines S along the longitudinal sides of the vehicle 1 represents the projected width of the vehicle 1 as seen in the direction of travel F of the vehicle. Depending on the angular alignments of the wheels 5 and the axles 2, 3 and on the condition of the vehicle frame 4, the projected width as seen in the direction of travel F of the vehicle 1 can differ from the minimum projected width of the vehicle 1.

There are a number of different ways of defining the longitudinal geometric centerline C of a vehicle 1. One definition of the longitudinal geometric centerline C of the vehicle 1 is a line extending between the midpoint of the front edge of the vehicle frame 4 and the midpoint of the rear edge of the vehicle frame 4. Another definition of the longitudinal geometric centerline C of the vehicle 1 is a line extending between the midpoint of the front wheel axle 3 and the midpoint of the rear wheel axle 2. If the vehicle has a number of wheel axles, the longitudinal geometric centerline C coincides with a mean line passing at each midpoint of each axle at a distance which is so determined that the sum of the distances to the midpoints will be as small as possible. This distance is obtained, for example, by the least square method. Since the vehicle frame 4 can be bent and the wheel axles 2, 3 be laterally displaced relative to the vehicle frame 4, the position of the longitudinal geometric centerline C can differ between two vehicles 1 of the same type and make.

Fig. 2 shows a schematic view from above of a vehicle 1, which is provided with a towing hitch 8. According to the Figure, the towing hitch 8 of the vehicle 1 is not placed on the longitudinal geometric centerline C. At the same time, the longitudinal geometric centerline C of the vehicle 1 does not coincide with the direction of travel F of the vehicle 1, and this results in asymmetric loading when the vehicle 1 is pulling a trailer (not shown) coupled to the towing hitch 8.

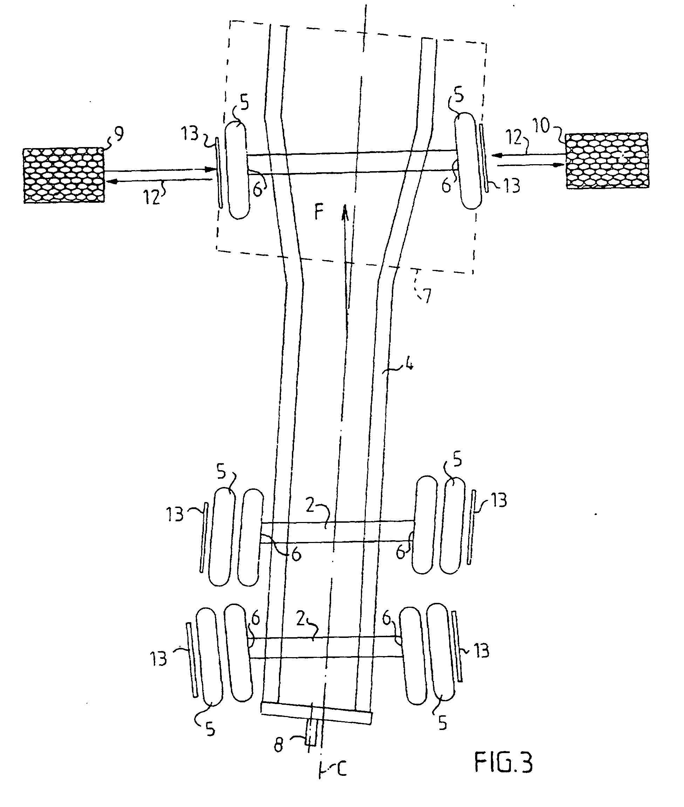

Fig. 3 shows schematically from above a vehicle 1, which is travelling with the wheels 5 rolling on a surface U in a given direction of travel F, between at least two measuring units 9, 10 spaced from the vehicle 1. Each measuring unit 9, 10 comprises a radiation source 11, which provides a measuring signal 12 which, as the vehicle 1 passes the measuring units 9, 10, strikes the outside of each wheel 5, i.e. the wheel side facing away from the vehicle 1. In Fig. 3, a reflecting means 13 has been mounted on the outside of each wheel 5, and this reflecting means 13 reflects the measuring signal 12 emitted from the respective radiation source 11. This signal is received by a detector 14. The measuring signal 12 received by the detector 14 is processed in a processor 15, which provides values for the alignment of the rotation axis of each wheel 5, the distance of each wheel 5 to the respective measuring unit 9, 10, the distance between each wheel 5 on each side of the vehicle 1 and the longitudinal geometric centerline C of the vehicle. The measured values for the alignment of the rotational axis of each wheel 5 are compared with predetermined ideal values for the alignments of the rotational axes of the wheels 5. Finally, the wheels 5 are adjusted so that the difference between the measured values for the alignment of the rotation axis of each wheel 5 and the ideal values for the alignment of the rotational axis of each wheel 5 will be as small as possible.

When the wheels 5 pass the respective measuring unit 9, 10, the time it takes for the wheels 5 to pass the respective measuring unit 9, 10 are measured. If the speed of the vehicle is known, the distance between each wheel 5 on each side of the vehicle 1 can be calculated. In order to determine the speed of the vehicle 1, a speedometer (not shown), in the form of a laser for example, can be arranged in front of or above the vehicle 1. The laser emits a measuring ray against the vehicle 1 when it passes the measuring units 9, 10 and the speed of the vehicle 1 is measured. The speedometer is coupled to the processor 15 which computes the distance between each wheel 5 on each side of the vehicle 1, based on the known speed and the time it takes for the wheels 5 to pass the measuring units 9, 10.

When the alignment of the rotational axes of the wheels 5 agrees with the ideal values for the alignment of the rotational axis of each wheel 5 and when the alignment of each axle 2, 3 has been adjusted in relation to the longitudinal geometric centerline C of the vehicle 1, the longitudinal geometric centerline C of the vehicle 1 will coincide with the direction of travel F of the vehicle 1. This also achieves the smallest possible projected width of the vehicle 1, as seen in the direction of travel F of the vehicle 1.

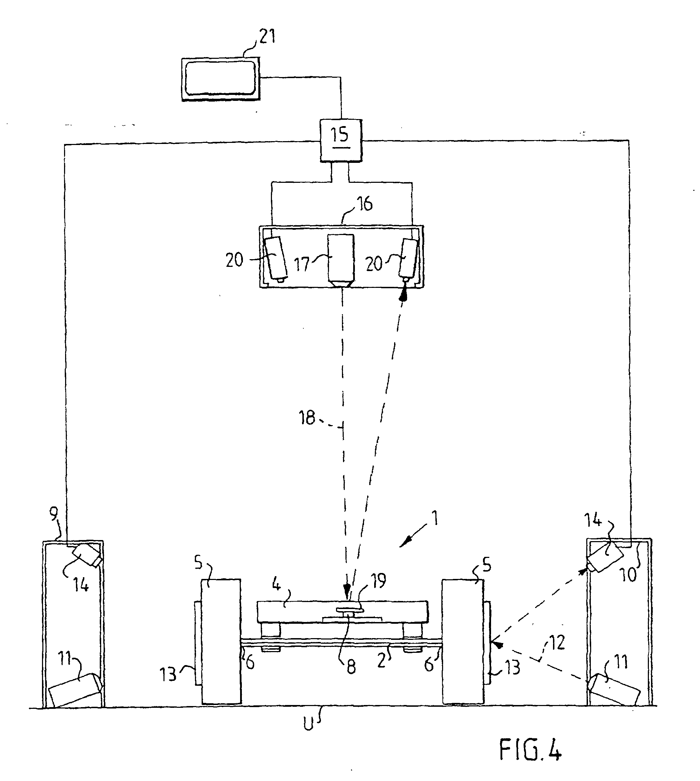

Fig. 4 shows a schematic view of a vehicle 1 as seen from behind, which passes three measuring units 9, 10, 16. One measuring unit 16 is arranged above the vehicle 1 and comprises a radiation source 17, which emits a measuring signal 18 which strikes the towing hitch 8 of the vehicle 1. A reflecting means 19 is mounted on the towing hitch 8 and reflects the measuring signal 12 emitted from the radiation source 17 which is then received by a detector 20. The measuring signal 18 received by the detector 20 is processed in the processor 17, which discloses how far the towing hitch 8 is located from the longitudinal geometric centerline C of the vehicle 1 and how high above the surface U the towing hitch is located. The result of the measurement can be presented on a monitor 21, for example. Finally, the towing hitch 8 is moved or the vehicle frame 4 is adjusted so that the towing hitch 8 is on the geometric longitudinal centerline C of the vehicle 1.

The reflecting means 13,19 can be a flat disc which is mounted on the outside of each wheel 5 and on the towing hitch 8. Alternatively, the measuring signals 12, 18 can be reflected directly against the tyre side or rim (not shown) of each wheel 5 and directly against the towing hitch 8. When a disc is mounted on the outside of a wheel 5, an angular error can arise if the disc is placed in such a manner that the rotational axis of the wheel 5 is not normal to the disc. When processing the measuring data, a compensation for this angular error can be made in the processor 15, however.

Preferably, the radiation source 11, 17 is a laser line projector, which projects two lines in a cross on each wheel side. By placing the detector 14, 20 at a given distance and at a given angle relative to the laser line projector, the angular variations of the cross projected on the wheel side can be measured. Based on the measured angular variations, the alignment of the rotational axis of each wheel 5 is obtained. Theoretically, it is sufficient to have one detector 11, 17 for two lines, but it is preferable to use two detectors 11, 17, one for each line, for measuring unit 9, 10, 16 to obtain good precision. The laser line projector, which is included in each measuring unit 9, 10, 16 thus emits measuring signals against the respective wheel side, said measuring signals being detected at a number of occasions by means of the detectors 11, 17. The detected information provides values concerning the orientation of the wheels 5, the towing hitch 8 and the longitudinal geometric centerline C of the vehicle 1.

In order to measure the projected width of the vehicle 1, additional measuring units (not shown) can be arranged above the vehicle 1, said measuring units detecting the sides of the cab and the rear superstructure 7 and how these relate to the direction of travel F of the vehicle 1. Alternatively, the measuring unit 16 above the vehicle 1 can detect the position of the cab and the rear superstructure 7.

In order to acquire more information and thus additionally increase the precision of the measuring system, in addition two measuring units (not shown) can be disposed on either side of the surface U which the vehicle 1 is to pass.

A predetermined coordinate system can be defined in the processor 15. One axis of the coordinate system can coincide with a straight line in the plane of the surface U midway between the measuring units 9, 16 placed on either side of the surface. The measuring values which each measuring unit 9, 10, 16 obtains can thus refer to the common coordinate system.

The ideal values for the alignment of the rotational axes of the wheels 5 are given for each vehicle type and are preferably preprogrammed in the processor 15.

Instead of using a radiation source in the form of a laser line projector, the orientation of the wheel side in space can be determined by stereo matching, which means that two cameras are arranged at a certain distance from each other. A point which is to be detected will appear in different parts of the picture for the two cameras. The difference between the positions perceived by the cameras is a measure of the distance to the point in question. By measuring a number of points located in a plane, the angle of the plane relative to a reference plane can be computed.

## Claims

1. Method for wheel alignment of a vehicle (1), comprising at least two wheel pairs and a connection, such as a vehicle frame (4) between the respective wheel pairs, each wheel (5) of each wheel pair having a wheel side facing away from the vehicle (1) and a rotational axis for each wheel (5), wherein
the vehicle (1), in a given direction of travel (F), is driven with the wheels (5) rolling on a surface (U) to pass between at least two measuring units (9, 10) free from the vehicle (1),
each measuring unit (9, 10), as the vehicle (1) passes the measuring units (9, 10), detects the orientation in space of each wheel side which are facing away from the vehicle (1) by repeated determination of the distance between the measuring unit (9, 10) and at least one point on the rotating wheel side,
the speed of the vehicle (1) is measured and the time it takes for the wheels (5) to pass the measuring units (9, 10) is measured,
each measuring unit (9, 10) sends the detected information on to a processor (15), which processes the information and which, after said processing, gives the alignment of the rotational axis of the wheel (5), the distance of each wheel (5) to the respective measuring unit, the distance between the respective wheel (5) on each side of the vehicle and the longitudinal centerline (C) of the vehicle, and the distance between each wheel (5) on each side of the vehicle (1),
the measured values for alignment of the rotational axis of each wheel (5) are compared with predetermined ideal values for the alignments of the rotational axes of the wheels (5), and
the wheels (5) are set so that the difference between the measured values for the alignment of the rotational axis of each wheel (5) and the ideal value for the alignment of the rotational axis of each wheel (5) will be smallest as possible and so that said geometric centerline coincides with the given direction of travel (F).

2. Method according to Claim 1, wherein the measuring unit (9,10) comprises a camera which reads the point on the wheel side.

3. Method according to Claim 1, wherein each measuring unit comprises a radiation source (11), which emits a measuring signal (12) which, as the vehicle (1) passes the measuring units (9,10) sequentially strikes the outside of each wheel (5), and
the measuring signal (12) is reflected by the outside of the wheel (5) and is received by a detector (14).

4. Method according to Claim 3, wherein a reflecting means (13) is mounted on the outside of each wheel (5), said reflecting means (13) reflecting the measuring signal (12) emitted from the respective radiation source (11).

5. Method according to one or more of the preceding claims, wherein a measuring unit (16) above the vehicle (1) detects the orientation of a towing hitch (8) mounted on the vehicle (1) in a plane parallel to the surface (U), by repeated determination of the distance between a reference point in the plane and at least one point on the towing hitch (8),
the information detected by the measuring unit (16) is processed in the processor (15), which discloses how far the towing hitch (8) is situated from the longitudinal geometric centerline C of the vehicle (1), and
the towing hitch (8) is moved or the vehicle frame (4) is adjusted so that the towing hitch (8) ends up on the geometric longitudinal centerline (C) of the vehicle (1).

6. Method according to Claim 5, wherein the measuring unit (16) above the vehicle (1) comprises a camera which reads the point on the towing hitch (8).

7. Method according to Claim 5, wherein the measuring unit (16) above the vehicle (1) comprises a radiation source (17), which is caused to emit a measuring signal (18) which strikes the towing hitch (8) of the vehicle (1), and the measuring signal (18) is reflected by the towing hitch (8) and is received by a detector (20).

8. Method according to Claim 7, wherein a reflecting means (19) is mounted on the towing hitch (8) of the vehicle (1), said reflecting means (19) reflecting the measuring signal (12) emitted from the radiation source (17).

9. Method according to Claim 5, wherein the measuring unit (16) above the vehicle (1) also detects the position of a cab and rear superstructure (7) mounted on the vehicle (1), relative to the direction of travel (F) of the vehicle (1).

10. Measuring system for measuring wheel angles and the projected width of a vehicle (1), which comprises at least two wheel pairs and a connection, such as a vehicle frame (4), between the respective wheel pairs, each wheel (5) of the respective wheel pairs having a wheel side facing away from the vehicle (1) and a rotational axis for each wheel (5),
at least two measuring units (9, 10), each comprising means (11) arranged to detect the orientation in space of each wheel side, which are facing away from the vehicle (1), by repeated determination of the distance between the measuring unit (9, 10) and at least one point on the rotating wheel side of the vehicle wheels (5), which wheels roll on a surface (U) when the vehicle (1) is driven in a given direction of travel (F) to pass between the measuring units (9, 10), and
a processor (15) connected to the means (11), which processor (15), based on information detected by the means (11), computes the alignment of the rotational axis of the wheel (5) and the distance of each wheel (5) to the respective measuring unit (9, 10),
**characterised in that** a speedometer is arranged to measure the speed of the vehicle, and **in that** the processor (15), based on information detected by the means (11) also computes the distance between the respective wheel (5) on each side of the vehicle (1) and the longitudinal geometric centerline (C) of the vehicle (1), and the distance between each wheel (5) on each side of the vehicle (1).

11. Measuring system according to Claim 10, **characterized in that** the means (11) comprises a camera, which reads the point on the wheel side.

12. Measuring system according to Claim 10, **characterized in that** the means (11) comprises a radiation source (11), which is intended to emit a measuring signal (12) in the direction towards each wheel side and
that a detector (14) is arranged to sense the reflected measuring signals (12) against each wheel side.

13. Measuring system according to Claim 12, **characterized in that** a reflecting means (13) is mounted on each wheel side and reflects the measuring signal (12) emitted from each radiation source (11).

14. Measuring means according to one or more of Claims 10-13, **characterized in that** an additional measuring unit (16) is arranged above the vehicle (1) and comprises a means (17) arranged to detect the orientation of a vehicle towing hitch (8) in a plane parallel to the surface (U) through repeated determination of the distance between a reference point in the plane and at least one point on the towing hitch (8), the measuring unit (16) being connected to the processor (15), which, based on the information detected, calculates the distance between the towing hitch (8) and the longitudinal geometric centerline (C) of the vehicle (1).

15. Measuring system according to Claim 14, **characterized in that** the measuring unit (16) above the vehicle (1) comprises a camera, which reads the point on the towing hitch (8).

16. Measuring system according to Claim 14, **characterized in that** the measuring unit (16) above the vehicle (1) comprises a radiation source (17) intended to emit a measuring signal (18) towards the towing hitch (8) of the vehicle (1), and a detector (20), which senses a measuring signal (12) reflected from the towing hitch (8).

17. Measuring system according to Claim 16, **characterized in that** a reflecting means (19) is mounted on the towing hitch (8) and reflects the measuring signal (18) emitted from the radiation source (17).

18. Measuring system according to one or more of Claims 13 or 17, **characterized in that** the reflecting means (13,19) is a flat disc.

19. Measuring system according to one or more of Claims 12, 13, 16-17, **characterized in that** the radiation source (11,17) is a laser line projector which projects at least one laser line against the reflecting means (13,19).

20. Measuring system according to one or more of Claims 12, 13, 16-19, **characterized in that** the detector (14,20) consists of at least one camera which is arranged in the measuring unit (9,10,16).

## Patentansprüche

1. Verfahren zur Radausrichtung eines Fahrzeugs (1), das mindestens zwei Radpaare und eine Verbindung wie einen Fahrzeugrahmen (4) zwischen den jeweiligen Radpaaren aufweist, wobei jedes Rad (5) jedes Radpaares eine Radseite, die von dem Fahrzeug (1) abgewandt ist, und eine Rotationsachse für jedes Rad (5) besitzt, wobei das Fahrzeug (1) in einer gegebenen Fahrtrichtung (F) fährt, während die Räder (5) auf einer Oberfläche (U) rollen, um zwischen mindestens zwei Messeinheiten (9, 10) frei von dem Fahrzeug (1) zu passieren,
wobei jede Messeinheit (9, 10), während das Fahrzeug (1) die Messeinheiten (9, 10) passiert, die Ausrichtung im Raum jeder Radseite erfasst, die weg von dem Fahrzeug (1) gewandt ist, und zwar durch wiederholte Bestimmung des Abstands zwischen der Messeinheit (9, 10) und mindestens einem Punkt an der rotierenden Radseite,
wobei die Geschwindigkeit des Fahrzeugs (1) gemessen wird und die Zeitdauer gemessen wird, die benötigt wird, dass die Räder (5) die Messeinheiten (9, 10) passieren,
wobei jede Messeinheit (9, 10) die erfasste Information weiter zu einem Prozessor (15) sendet, der die Information verarbeitet und der nach der Verarbeitung die Ausrichtung der Rotationsachse des Rades (5), den Abstand jedes Rades (5) zu der jeweiligen Messeinheit, den Abstand zwischen dem jeweiligen Rad (5) auf jeder Seite des Fahrzeugs und der längsgerichteten Mittellinie (C) des Fahrzeugs und den Abstand zwischen jedem Rad (5) auf jeder Seite des Fahrzeugs (1) ausgibt,
die gemessenen Werte für die Ausrichtung der Rotationsachse jedes Rades (5) werden mit vorbestimmten Idealwerten für die Ausrichtungen der Rotationsachsen des Rades (5) verglichen, und
die Räder (5) werden derart eingestellt, dass der Unterschied zwischen den gemessenen Werten für die Ausrichtung der Rotationsachse jedes Rades (5) und dem Idealwert für die Ausrichtung der Rotationsachse jedes Rades (5) so gering wie möglich sein wird und dass die geometrische Mittellinie mit der gegebenen Fahrtrichtung (F) zusammentrifft.

2. Verfahren nach Anspruch 1, bei welchem die Messeinheit (9, 10) eine Kamera aufweist, welche den Punkt an der Radseite liest.

3. Verfahren nach Anspruch 1, bei welchem jede Messeinheit eine Strahlungsquelle (11) aufweist, die ein Messsignal (12) ausgibt, das wenn das Fahrzeug (1) die Messeinheiten (9, 10) passiert, sequentiell auf die Außenseite des jeweiligen Rades (5) trifft, und
das Messsignal (12) wird auf die Außenseite des Rades (5) reflektiert und wird durch einen Detektor (14) empfangen.

4. Verfahren nach Anspruch 3, bei welchem eine Reflektiereinrichtung (13) an der Außenseite jedes Rades (5) eingebaut ist, wobei die Reflektiereinrichtung (13) das jeweilige von der Strahlungsquelle (11) ausgestrahlte Messsignal (12) reflektiert.

5. Verfahren nach einem oder mehreren der vorhergehenden Ansprüche, bei welchem eine Messeinheit (16) oberhalb des Fahrzeugs (1) die Ausrichtung eines an dem Fahrzeug (1) montierten Schlepphakens (8) in einer Ebene parallel zu der Oberfläche (U) durch wiederholte Bestimmung des Abstands zwischen einem Bezugspunkt in der Ebene und mindestens einem Punkt an dem Schlepphaken (8) erfasst,
die durch die Messeinheit (16) erfasste Information wird in dem Prozessor (15) verarbeitet, der angibt, wie weit der Schlepphaken (8) von der längsgerichteten, geometrischen Mittellinie C des Fahrzeugs (1) gelegen ist, und
der Schlepphaken (8) wird derart bewegt oder der Fahrzeugrahmen wird derart eingestellt, dass der Schlepphaken (8) auf der geometrischen, längsgerichteten Mittellinie (C) des Fahrzeugs (1) endet.

6. Verfahren nach Anspruch 5, bei welchem die Messeinheit (16) oberhalb des Fahrzeugs (1) eine Kamera aufweist, die den Punkt an dem Schlepphaken (8) einliest.

7. Verfahren nach Anspruch 5, bei welchem die Messeinheit (16) oberhalb des Fahrzeugs (1) eine Strahlungsquelle (17) aufweist, die veranlasst wird, ein Messsignal (18) auszustrahlen, welches auf den Schlepphaken (8) des Fahrzeugs trifft, und das Messsignal (18) wird durch den Schlepphaken (8) reflektiert und durch einen Detektor (10) empfangen.

8. Verfahren nach Anspruch 7, bei welchem die Reflektiereinrichtung (19) an dem Schlepphaken (8) des Fahrzeugs angebaut ist, wobei die Reflektiereinrichtung (19) das von der Strahlungsquelle (17) ausgestrahlte Messsignal (12) reflektiert.

9. Verfahren nach Anspruch 5, bei welchem die Messeinheit (16) oberhalb des Fahrzeugs ebenso die Position einer Kabine und eines hinteren Aufbaus (7), die an dem Fahrzeug (1) angebaut sind, in Bezug auf eine Fahrtrichtung (F) des Fahrzeugs (1) erfasst.

10. Messsystem zum Messen von Radwinkeln und der projizierten Breite eines Fahrzeugs (1), umfassend
mindestens zwei Radpaare und eine Verbindung wie einen Fahrzeugrahmen zwischen den jeweiligen Radpaaren, wobei jedes Rad (5) des jeweiligen Radpaars eine von dem Fahrzeug (1) abgewandte Radseite und eine Rotationsachse für jedes Rad (5) besitzt,
mindestens zwei Messeinheiten (9, 10), die jeweils Mittel (11) aufweisen, die angeordnet sind, um die Ausrichtung im Raum der jeweiligen Radseite, die von dem Fahrzeug (1) abgewandt ist, durch wiederholte Bestimmung des Abstands zwischen der Messeinheit (9, 10) und
mindestens einem Punkt an der rotierenden Radseite der Fahrzeugräder (5) zu erfassen, welche Räder auf einer Oberfläche (U) rollen, wenn das Fahrzeug (1) in einer gegebenen Fahrtrichtung (F) fährt, um zwischen den Messeinheiten (9, 10) zu passieren, und
einem Prozessor (15), der mit den Mitteln (11) verbunden ist, welcher Prozessor (15) basierend auf durch die Mittel (11) erfasste Information die Ausrichtung der Rotationsachse des Rades (5) und den Abstand jedes Rades (5) zu der jeweiligen Messeinheit (9, 10) berechnet,
**dadurch gekennzeichnet, dass** ein Geschwindigkeitsmesser angeordnet ist, um die Geschwindigkeit des Fahrzeugs zu messen, und dass der Prozessor (15) basierend auf der durch die Mittel (11) erfasste Information auch den Abstand zwischen dem jeweiligen Rad (5) auf jeder Seite des Fahrzeugs (1) und die längsgerichtete, geometrische Mittellinie (C) des Fahrzeugs (1) und den Abstand zwischen jedem Rad (5) auf jeder Seite des Fahrzeugs (1) berechnet.

11. Messsystem nach Anspruch 10, **dadurch gekennzeichnet, dass** die Mittel (11) eine Kamera umfassen, die den Punkt an der Radseite einliest.

12. Messsystem nach Anspruch 10, **dadurch gekennzeichnet, dass** die Mittel (11) eine Strahlungsquelle (11) umfassen, die dazu vorgesehen ist, ein Messsignal (12) in der Richtung zu der jeweiligen Radseite auszustrahlen, und
dass ein Detektor (14) angeordnet ist, um die reflektierte Messsignale (12) an jeder Radseite zu erfassen.

13. Messsystem nach Anspruch 12, **dadurch gekennzeichnet, dass** eine Reflektiereinrichtung (13) an jeder Radseite angebaut ist, und dass von der jeweiligen Strahlungsquelle (11) ausgestrahlte Messsignal (12) reflektiert.

14. Messsystem nach einem oder mehreren der Ansprüche 10-13, **dadurch gekennzeichnet, dass** eine zusätzliche Messeinheit (16) oberhalb des Fahrzeugs (1) angeordnet ist und Mittel (17) aufweist, die angeordnet sind, um die Ausrichtung eines Fahrzeugschlepphakens (8) in eine Ebene parallel zu der Oberfläche (U) durch wiederholte Bestimmung des Abstands zwischen einem Bezugspunkt in der Ebene und mindestens einen Punkt an dem Schlepphaken (8) zu erfassen, wobei die Messeinheit (16) mit den Prozessor (15) verbunden ist, der basierend auf der erfassten Information den Abstand zwischen dem Schlepphaken (8) und der längsgerichteten, geometrischen Mittellinie (C) des Fahrzeugs (1) berechnet.

15. Messsystem nach Anspruch 14, **dadurch gekennzeichnet, dass** die Messeinheit (16) oberhalb des Fahrzeugs (1) eine Kamera aufweist, die den Punkt an dem Schlepphaken (8) einliest.

16. Messsystem nach Anspruch 14, **dadurch gekennzeichnet, dass** die Messeinheit (16) oberhalb des Fahrzeugs (1) eine Strahlungsquelle (17) aufweist, die dazu vorgesehen ist, ein Messsignal (18) zu dem Schlepphaken des Fahrzeugs auszustrahlen, und einen Detektor (20) aufweist, der ein von dem Schlepphaken (8) reflektiertes Messsignal (12) erfasst.

17. Messsystem nach Anspruch 16, **dadurch gekennzeichnet, dass** eine Reflektiereinrichtung (19) an dem Schlepphaken (8) eingebaut ist und das von der Strahlungsquelle (17) ausgestrahlte Messsignal (18) reflektiert.

18. Messsystem nach einem oder mehreren der Ansprüche 13 oder 17, **dadurch gekennzeichnet, dass** die Reflektiereinrichtung (13, 19) eine ebene Scheibe ist.

19. Messsystem nach einem oder mehreren der Ansprüche 12, 13, 16-17, **dadurch gekennzeichnet, dass** die Strahlungsquelle (11, 17) ein Laserlinienprojektor ist, der mindestens eine Laserlinie auf die Reflektiereinrichtung (13, 19) projiziert.

20. Messsystem nach einem oder mehreren der Ansprüche 12,13, 16-19, **dadurch gekennzeichnet, dass** der Detektor (14, 20) aus mindestens einer Kamera besteht, die in der Messeinheit (9, 10, 16) angeordnet ist.

## Revendications

1. Une méthode d'alignement de roues d'un véhicule (1), comportant au moins deux paires de roues et une connexion, telle qu'un châssis de véhicule (4) entre les paires de roues respectives, chaque roue (5) de chaque paire de roues ayant un côté de roue orienté à l'opposé du véhicule (1) et un axe rotationnel pour chaque roue (5), dans laquelle
le véhicule (1), dans une direction donnée de déplacement (F), est conduit tandis que les roues (5) roulent sur une surface (U) pour passer entre au moins deux éléments de mesure (9, 10) indépendants du véhicule (1),
chaque élément de mesure (9, 10), tandis que le véhicule (1) passe les éléments de mesure (9, 10) détecte l'orientation dans l'espace de chaque côté de roue orienté à l'opposé du véhicule (1) par détermination répétée de la distance entre l'élément de mesure (9, 10) et au moins un point sur le côté de roue en rotation,
la vitesse du véhicule (1) est mesurée et le temps que prennent les roues (5) pour passer l'élément de mesure (9, 10) est mesuré,
chaque élément de mesure (9, 10) transmet l'information détectée à un processeur (15), qui traite l'information et qui, après ledit traitement, fournit l'alignement de l'axe rotationnel de la roue (5), la distance de chaque roue (5) jusqu'à l'élément de mesure respectif, la distance entre la roue respective (5) sur chaque côté du véhicule et l'axe longitudinal (C) du véhicule, ainsi que la distance entre chaque roue (5) sur chaque côté du véhicule (1),
les valeurs mesurées pour l'alignement de l'axe rotationnel de chaque roue (5) sont comparées avec des valeurs idéales prédéterminées pour les alignements des axes rotationnels des roues (5), et
les roues (5) sont réglées afin que la différence entre les valeurs mesurées pour l'alignement de l'axe rotationnel de chaque roue (5) et la valeur idéale pour l'alignement de l'axe rotationnel de chaque roue (5) soit la plus petite possible et afin que ledit axe géométrique coïncide avec la direction donnée de déplacement (F).

2. Une méthode selon la revendication 1, dans laquelle l'élément de mesure (9, 10) comporte une caméra qui lit le point sur le côté de la roue.

3. Une méthode selon la revendication 1, dans laquelle chaque élément de mesure comporte une source de radiation (11), qui émet un signal de mesure (12) qui, tandis que le véhicule (1) passe les éléments de mesure (9, 10) frappe en séquence l'extérieur de chaque roue (5), et
le signal de mesure (12) est réfléchi par l'extérieur de la roue (5) et est reçu par un détecteur (14).

4. Une méthode selon la revendication 3, dans laquelle un moyen réfléchissant (13) est monté sur l'extérieur de chaque roue (5), ledit moyen réfléchissant (13) réfléchissant le signal de mesure (12) émis par la source de radiation respective (11).

5. Une méthode selon l'une quelconque des revendications précédentes, dans laquelle un élément de mesure (16) au dessus du véhicule (1) détecte l'orientation d'un attelage de remorque (8) monté sur le véhicule (1) dans un plan parallèle à la surface (U), par détermination répétée de la distance entre un point de référence dans le plan et au moins un point sur l'attelage de remorque (8),
l'information détectée par l'élément de mesure (16) est traitée dans le processeur (15), qui révèle la distance qui sépare l'attelage de remorque (8) de l'axe géométrique longitudinal (C) du véhicule (1), et
l'attelage de remorque (8) est déplacé ou le châssis du véhicule (4) est ajusté afin que l'attelage de remorque (8) se retrouve sur l'axe géométrique longitudinal (C) du véhicule (1).

6. Une méthode selon la revendication 5 dans laquelle l'élément de mesure (16) au dessus du véhicule (1) comporte une caméra qui lit le point sur l'attelage de remorque (8).

7. Une méthode selon la revendication 5 dans laquelle l'élément de mesure (16) au dessus du véhicule (1) comporte une source de radiation (17) qui est adaptée pour émettre un signal de mesure (18) qui frappe l'attelage de remorque (8) du véhicule (1), et le signal de mesure (18) est réfléchi par l'attelage de remorque (8) et il est reçu par un détecteur (20).

8. Une méthode selon la revendication 7 dans laquelle un moyen réfléchissant (19) est monté sur l'attelage de remorque (8) du véhicule (1), ledit moyen réfléchissant (19) réfléchissant le signal de mesure (12) émis par la source de radiation (17).

9. Une méthode selon la revendication 5 dans laquelle l'élément de mesure (16) au dessus du véhicule (1) détecte également la position de cabine et de superstructure (7) montées sur le véhicule (1) relativement à la direction de déplacement (F) du véhicule (1).

10. Un système pour mesurer les angles de roues et la largeur projetée d'un véhicule (1), qui comporte au moins deux paires de roues et une connexion, tel qu'un châssis de véhicule (4), entre les paires de roues respectives, chaque roue (5) de chaque paire respective de roues ayant un côté orienté à l'opposé du véhicule (1) et un axe rotationnel pour chaque roue (5),
au moins deux éléments de mesure (9, 10), comportant chacun un moyen (11) aménagé pour détecter l'orientation dans l'espace de chaque côté de roue, qui est orienté à l'opposé du véhicule (1), par détermination répétée de la distance entre l'élément de mesure (9, 10) et au moins un point sur le côté de roue en rotation des roues du véhicule (5), lesquelles roues roulent sur une surface (U) lorsque le véhicule (1) est conduit dans une direction donnée de déplacement (F) pour passer entre les éléments de mesure (9, 10), et un processeur (15), connecté au moyen (11), lequel processeur (15), en se basant sur l'information détectée par le moyen (11), évalue l'alignement de l'axe rotationnel de la roue (5) et la distance de chaque roue (5) jusqu'à l'élément de mesure (9, 10) respectif,
**caractérisé en ce qu'**un indicateur de vitesse est aménagé pour mesurer la vitesse du véhicule, et **en ce que** le processeur (15), en se basant sur l'information détectée par le moyen (11) évalue également la distance entre la roue (5) respective sur chaque côté du véhicule (1) et l'axe géométrique longitudinal (C) du véhicule (1), et la distance entre chaque roue (5) sur chaque côté du véhicule (1).

11. Un système de mesure selon la revendication 10, **caractérisé en ce que** le moyen (11) comporte une caméra, qui lit le point sur le côté de la roue.

12. Un système de mesure selon la revendication 10, **caractérisé en ce que** le moyen (11) comporte une source de radiation (11) qui est conçue pour émettre un signal de mesure (12) dans la direction de chaque côté de roue et
**en ce qu'**un détecteur (14) est aménagé pour percevoir les signaux de mesure réfléchis (12) contre chaque côté de roue.

13. Un système de mesure selon la revendication 12, **caractérisé en ce qu'**un moyen réfléchissant (13) est monté sur chaque côté de roue et réfléchit le signal de mesure (12) émis par chaque source de radiation (11).

14. Un système de mesure selon l'une ou plusieurs des revendications 10 à 13 **caractérisé en ce qu'**un élément de mesure additionnel (16) est aménagé au dessus du véhicule (1) et comporte un moyen (17) aménagé pour détecter l'orientation d'un attelage de remorque (8) de véhicule dans un plan parallèle à la surface (U) par détermination répétée de la distance entre un point de référence dans le plan et au moins un point sur l'attelage de remorque (8), l'élément de mesure (16) étant connecté au processeur (15), qui, en se basant sur l'information détectée, calcule la distance entre l'attelage de remorque (8) et l'axe géométrique longitudinal (C) du véhicule (1).

15. Un système de mesure selon la revendication 14, **caractérisé en ce que** l'élément de mesure (16) au dessus du véhicule (1) comporte une caméra, qui repère *(lit)* le point sur l'attelage de remorque (8).

16. Un système de mesure selon la revendication 14, **caractérisé en ce que** l'élément de mesure (16) au dessus du véhicule (1) comporte une source de radiation (17) conçue pour émettre une signal de mesure (18) vers l'attelage de remorque (8) du véhicule (1), et un détecteur (20), qui perçoit un signal de mesure (12) réfléchi par l'attelage de remorque (8).

17. Un système de mesure selon la revendication 16, **caractérisé en ce qu'**un moyen réfléchissant (19) est monté sur l'attelage de remorque (8) et réfléchit le signal de mesure (18) émis par la source de radiation (17).

18. Un système de mesure selon l'une ou les deux revendications 13 ou 17, **caractérisé en ce que** le moyen réfléchissant (13, 19) est un disque plat.

19. Un système de mesure selon l'une ou plusieurs des revendications 12, 13, 16 à 17, **caractérisé en ce que** la source de radiation (11, 17) est un projecteur de ligne laser qui projette au moins une ligne laser contre le moyen réfléchissant (13, 19).

20. Un système de mesure selon l'une ou plusieurs des revendications 12, 13, 16 à 19, **caractérisé en ce que** le détecteur (14, 20) consiste d'au moins une caméra qui est aménagée dans l'élément de mesure (9, 10, 16).
